# EUROPÄISCHE PATENTSCHRIFT

(11) **EP 0 786 945 B1**
(45) Veröffentlichungstag und Bekanntmachung des Hinweises auf die Patenterteilung: **30.12.1998**
(21) Anmeldenummer: 95935284.0
(22) Anmeldetag: 18.10.1995
(51) Int. Cl.: A23K 1/165

(54) **FUTTERMITTELZUSATZ ZUR INAKTIVIERUNG VON MYKOTOXINEN**
FODDER ADDITIVE TO DE-ACTIVATE MYCOTOXINS
ADDITIF DE FOURRAGE POUR INACTIVER DES MYCOTOXINES

(30) Priorität: 19.10.1994 AT 357/94
(43) Veröffentlichungstag der Anmeldung: 06.08.1997
(73) Patentinhaber: Erber Aktiengesellschaft, 3130 Herzogenburg (AT)
(72) Erfinder: ERBER, Erich, 3100 St. Pölten (AT)
(74) Vertreter: Pollhammer, Gerda
(86) Internationale Anmeldenummer: AT9500204
(87) Internationale Veröffentlichungsnummer: WO9612414

(56) Entgegenhaltungen:
- US-A- 5 445 956
- ISI ATLAS OF SCIENCE: BIOCHEMISTRY, Bd. 1, Nr. 4, 1988 Seiten 287-291, HELMUT THOMAS ET AL. 'Functions of epoxide hydrolases'
- FEBS LETTERS, Bd. 275, Nr. 1-2, 1990 AMSTERDAM NL, Seiten 107-110, RICHARD E. KNEUSEL ET AL. 'Detoxification of the macrolide toxin brefeldin A by Bacillus subtilis'
- BIOCHEMICAL AND BIOPHYSICAL RESEARCH COMMUNICATIONS, Bd. 110, Nr. 2, 1983 Seiten 668-674, JOHN J. CH'IH ET AL. 'Activation and deactivation of aflatoxin B1 in isolated rat hepatocytes'
- CHEMICAL AND PHARMACEUTICAL BULLETIN, Bd. 25, Nr. 12, 1977 TOKYO JP, Seiten 3410-3414, YASUKO NAKAMURA ET AL. 'Reactivity of 12,13-epoxytrichothecenes with epoxide hydrolase, glutathione-S-transferase and glutathione'

## Beschreibung

Die vorliegende Erfindung betrifft einen Futtermittelzusatz zur Inaktivierung von Mykotoxinen in Futtermitteln bzw. im Verdauungstrakt von Tieren, wobei in einem Futtermittel ein aus Enzyme produzierenden Organismen aus den Gruppen der Pflanzen, Bakterien, Hefen oder Protozoen hergestelltes Enzympräparat in einer Menge von 0,1 bis 3 kg/1000 kg des Futtermittels enthalten ist, die Verwendung eines Futtermittelzusatzes zur Inaktivierung von Mykotoxinen in Futtermitteln bzw. im Verdauungstrakt von Tieren, sowie ein Verfahren zur Herstellung eines Futtermittels enthaltend den Futtermittelzusatz.

Aus der EP-A 0 257 996 ist bereits ein Futterprämix sowie ein Verfahren zu dessen Herstellung bekanntgeworden, welches neben einem physiologisch verträglichen Träger, wie z.B. Getreidemehl, ein oder mehrere Enzyme zugesetzt enthält. Auch aus der EP-A 0 286 056 ist eine Futtermittelmischung sowie ein Verfahren zum Behandeln von Futterrohmaterial bekanntgeworden, welche eine Enzymzubereitung zugesetzt enthalten. Beide bekannten Futtermittelzusammensetzungen enthalten hiebei im wesentlichen Amylasen zugesetzt, da derartige Getreide-zersetzende Enzyme Jungtieren, insbesondere Schweinen fehlen.

Weiters ist beispielsweise der AT-PS 397 756 ein Futtermittelzusatz zu entnehmen, welcher zum Absorbieren von Toxinen anorganische Substanzen mit großer innerer Oberfläche, wie z.B. Silikate oder Zeolithe und organische heterozyklische Polymere enthält.

Mykotoxine, welche giftige Stoffwechselprodukte von Schimmelpilzen darstellen, gelten in der Futtermittelindustrie und Tierzucht bis zu einem gewissen Grad als unvermeidbar und werden zu einem hohen Grad als Verursacher von Leistungseinbußen bei der Haltung und Zucht von Nutztieren erkannt. Es wurden daher bereits seit längerer Zeit verschiedenste Methoden angewandt, um die Zufuhr von Mykotoxinen zu dem Tierkörper hintan zu halten bzw. die dem Tierkörper zugeführten Mykotoxine zu inaktivieren, um die schädliche Wirkung der Mykotoxine in dem Tierkörper zu verhindern. Dies insbesondere, da Mykotoxine aufgrund der in dem Molekül vorhandenen, funktionellen Gruppen meist eine hohe chemische Reaktivität aufweisen. Diese hohe chemische Reaktivität spielt eine zentrale Rolle im Toxizitätsverhalten derartiger Substanzen, da diese Gruppen mit biologisch wichtigen Molekülen, wie etwa den Nukleinsäuren, den Enzymen, aber auch den Lipiden der Zellmembran wechselwirken.

Zur Detoxifizierung der Mykotoxine wurden daher bis dato physikalische Methoden, wie beispielsweise die Extraktion, die Erhitzung, die Bestrahlung sowie die Adsorption der Mykotoxine, als auch die chemische Inaktivierung derselben, beispielsweise durch Behandlung mit Säuren, Basen und verschiedenen Oxidationsmitteln, beschrieben. Unter diesen verschiedenen, bekannten Verfahren hat sich für die Anwendung in der Praxis die Adsorption als am geeignetsten erwiesen. Diese Adsorption wird hiebei üblicherweise durch Zusatz von größeren Mengen an Adsorptionsmitteln, wie beispielsweise Tonmineralien, Aktivkohle oder Polymeren, durchgeführt. Allerdings ist auf diese Weise aufgrund des Wirkungsmechanismus der Adsorption keinesfalls eine vollständige Inaktivierung bzw. Fixierung aller Mykotoxine auf den Adsorptionsmitteln möglich. Im wesentlichen funktioniert die Adsorption hiebei durch die Ausbildung einer sogenannten Hydratationshülle auf dem Adsorptionsmittel, an welcher sich aufgrund der van der Waals'schen Kräfte polare Moleküle anlagern. Auf diese Weise konnten bis dato polare Mykotoxine, wie beispielsweise die Aflatoxine, in relativ zufriedenstellenderweise inaktiviert werden. Mykotoxine, welche weniger stark polare, funktionelle Gruppen aufweisen, können auf diese Weise jedoch nur unzureichend an die Adsorptionsmittel gebunden werden und eine ausreichende Inaktivierung derartiger Mykotoxine ist mit den Adsorptionsverfahren nach dem Stand der Technik keinesfalls möglich.

Die Erfindung zielt daher darauf ab, einen Futtermittelzusatz, insbesondere ein Enzympräparat aus Enzyme produzierenden Organismen aus den Gruppen der Pflanzen, Bakterien, Hefen oder Protozoen zur Inaktivierung von Mykotoxinen in Futtermitteln bzw. im Verdauungstrakt von Tieren zur Verfügung zu stellen, bei welchem die in Futtermitteln üblicherweise auftretenden Mykotoxine sowohl adsorbiert als auch zumindest teilweise abgebaut werden können und somit die nachteiligen Effekte, welche durch das Vorhandensein der Mykotoxine in den Futtermitteln bewirkt werden, weitgehend beseitigt werden können.

Die Erfindung zielt weiters auf die Verwendung eines Futtermittelzusatzes ab, welcher die in den Futtermitteln bzw. dem Verdauungstrakt von Tieren vorhandenen Mykotoxine inaktivieren kann, um so Leistungseinbußen bei der Nutztierhaltung zu vermeiden.

Zur Lösung dieser Aufgabe besteht der erfindungsgemäße Futtermittelzusatz darin, daß die Enzyme produzierenden Organismen aus den Gruppen, die zur Bildung von Epoxidasen und/oder Laktonasen befähigt sind, gewählt sind. Dadurch, daß die Enzyme produzierenden Organismen aus den Gruppen, die zur Bildung von Epoxidasen und/oder Laktonasen befähigt sind, gewählt sind, gelingt es die in einem Tierfuttermittel enthaltene Mykotoxine, welche eine hohe chemische Reaktivität aufweisen und somit extrem stark toxisch sind, weitgehend durch das Enzympräparat im Futtermittel bzw. in dem Verdauungstrakt des Tieres abzubauen und/oder in nicht oder weniger toxische Verbindungen chemisch umzuwandeln und somit ihre Toxizität stark herabzusetzen.

Insbesondere wird hiebei ein Enzympräparat eingesetzt, welches in vorteilhafter Weise durch Herstellung einer Reinkultur bzw. von Reinkulturen der Enzym produzierenden Organismen, die zur Bildung von Epoxidasen und/oder Laktonasen befähigt sind, in an sich bekannter Weise in Abhängigkeit von ihren optimalen Wachstumsbedingungen gewonnen wurde. Anschließend werden die Zellen dieser vermehrten Reinkulturen ebenfalls in bekannter Weise inaktiviert, um auf diese Weise Enzyme zu erhalten, welche in keiner Weise verändert wurden und somit unbeschädigt geblieben sind. Als Enzympräparat ist es in der Folge möglich, entweder diese inaktivierten Zellen direkt oder einen Roh- bzw. Reinextrakt aus diesen Zellen dem Futtermittel beizumischen. In besonders bevorzugter Weise werden hiebei Epoxidasen und/oder Laktonasen eingesetzt. Enzyme bzw. Enzympräparate haben den Vorteil, daß sie Mykotoxine, welche allgemein in sehr unterschiedliche chemische Substanzklassen fallen, abbauen bzw. chemisch umwandeln können. Dies insbesondere deshalb, weil eine Vielzahl von Mykotoxinen zyklische Kohlenwasserstoffverbindungen mit Sauerstoff als Heteroatom darstellen, wobei die Bindung des Sauerstoffes in diesen Zyklen sehr häufig in Form eines Epoxides oder eines Laktons erfolgt. Die bevorzugt eingesetzten Epoxidasen, welche in die Gruppe der Hydrolasen fallen, spalten hiebei den Epoxidring des Mykotoxins unter Bildung von zwei Hydroxylgruppen, wobei die Hydroxylgruppen in der Folge vom Tierkörper leicht abgebaut werden können. Die ebenfalls bevorzugt eingesetzten Laktonasen wirken auf analoge Art und Weise. Um diese Wirkung zu ereichen kann bereits vor der Verfütterung ein teilweiser Abbau der Mykotoxine erreicht werden, indem das Futtermittel, der erfindungsgemäße Futtermittelzusatz sowie Wasser, welches auf einen leicht sauren bis neutralen pH-Wert eingestellt ist, vorvermischt und direkt verfüttert werden. Hiebei ist darauf zu achten, daß der gebildete Futtermittelbrei nicht zu stark angesäuert wird, um die Freßgewohnheiten der Tiere nicht nachteilig zu beeinflussen bzw. gesundheitliche Beeinträchtigungen hervorzurufen. Besonders günstig ist in diesem Zusammenhang, daß der Mykotoxinabbau mit dem Enzympräparat ohne Zufuhr zusätzlicher Energie funktioniert und allein durch die homogene Untermischung des Enzympräparates unter das Futtermittel im Milieu des Verdauungstraktes des Tieres oder gegebenenfalls bereits bei Vermischung mit auf einen entsprechenden pH-Wert eingestelltem Wasser erreicht werden kann.

Besonders bevorzugt wird gemäß der vorliegenden Erfindung als Enzympräparat ein Extrakt aus Saccharomyces-Stämmen, insbesondere aus Saccharomyces telluris, eingesetzt. Saccharomyces-Stämme sind eine spezielle Gattung von Hefen, welche bei der Gewinnung von Enzymen eine der wichtigsten Gruppen sind. Die Hefen können hiebei verschiedenste hydrolytische Enzyme in extrem hohen Mengen bilden, und es hat sich gezeigt, daß die in der Futtermittelindustrie für völlig andere Zwecke verwendete Gattung der Saccharomyces-Stämme auch zu einem besonders schnellen und vollständigen Abbau der Mykotoxine, welche sowohl eine Epoxid- als auch Laktongruppe aufweisen können, verwendet werden kann. In besonders bevorzugter Weise wird hiefür Saccharomyces telluris eingesetzt, mit welcher der Abbau von Trichothezenen, insbesondere von T-2-Toxin, H-T-2-Toxin und Deoxynivalenol, unter natürlichen, im Magen-Darm-Trakt von Tieren herrschenden Bedingungen erreicht werden kann. Durch den Zusatz von insbesondere Saccharomyces telluris konnte hiebei der Epoxidring der oben genannten Mykotoxine gespalten werden und die gebildete Dinydroxyverbindung wird in der Folge im Verdauungstrakt verstoffwechselt, ohne eine toxische Wirkung zu zeigen.

Um eine größtmögliche Inaktivierung von in Futtermitteln enthaltenen Mykotoxinen zu erreichen, ist der erfindungsgemäße Futtermittelzusatz mit Vorzug so aufgebaut, daß zusätzlich ein natürliches oder synthetisches, poröses Mineral mit großer, innerer Oberfläche in einer Menge von 0,5 bis 8 kg/1000 kg, insbesondere 0,7 bis 4 kg/1000 kg, des Futtermittels enthalten ist. Durch einen Futtermittelzusatz aus einer Mischung aus einem Enzympräparat und einem natürlichen oder synthetischen, porösen Mineral mit großer innerer Oberfläche wird sichergestellt, daß in einem wässrigen Medium mit einem dem Verdauungstrakt von Tieren entsprechenden pH-Wert bzw. im Verdauungstrakt von Tieren selbst sämtliche sich auf der Oberfläche des Futtermittels befindlichen, insbesondere polaren Mykotoxine entweder an dem Mineral adsorbiert werden oder aber direkt durch das Enzympräparat abgebaut bzw. chemisch umgewandelt werden. Auch hat das Vorhandensein des natürlichen oder synthetischen, porösen Minerals mit großer innerer Oberfläche den Vorteil, daß durch die Adsorption an der Oberfläche dieser Mineralien befindliche Mykotoxine einer weiteren Zersetzung durch das Enzympräparat leichter zugänglich sind.

Als natürliches oder synthetisches, poröses Mineral mit großer innerer Oberfläche sind hiebei gemäß der vorliegenden Erfindung bevorzugt Kieselgure, Zeolithe, 2- und 3-Schichttonminerale oder Mischungen davon mit einem kumulierten Porenvolumen von 0,05 bis 4 cm³/g, insbesondere 0,5 bis 2,5 cm³/g, und einem Oberflächen-pH-Wert von 4,5 bis 7,5 eingesetzt. Kieselgure, Zeolithe, und/oder Schichttonminerale oder auch Mischungen davon, welche ein kumuliertes Porenvolumen von 0,05 bis 4 cm³/g, insbesondere 0,5 bis 2,5 cm³/g, aufweisen, können besonders effizient Mykotoxine adsorbieren und somit in einem großen Ausmaß inaktivieren. Derartige Mineralien weisen in vorteilhafter Weise Porendurchmesser von 10 um bis zu 1 µ auf und besitzen einen Oberflächen-pH-Wert von 4,5 bis 7,5. Derartige Mineralien werden in herkömmlicher Weise vorbereitet, wobei besonders bevorzugt die Mineralien bei etwa 800 °C bis 900 °C ohne Einsatz eines Flußmittels kalziniert werden, wodurch eine Vergleichmäßigung der Porenoberflächenstruktur erreicht werden kann. Es können beispielsweise Mineraliengemische aus 80 % Klinoptilolith und 20 % Muskovit, 80 % Chabasit und 20 % Muskovit, 75 % Klinoptilolith und 25 % Kaolinit sowie 85 % Chabasit und 15 % Kaolinit eingesetzt werden.

Schließlich ist der erfindungsgemäße Futtermittelzusatz zur Inaktivierung von Mykotoxinen in Futtermitteln bzw. im Verdauungstrakt von Tieren im wesentlichen dadurch gekennzeichnet, daß eine Mischung aus 1 bis 65 Gew.-%, insbesondere 5 bis 50 Gew.-%, Enzympräparat und 99 bis 35 Gew.-%, insbesondere 95 bis 500 Gew.-%, natürliche oder synthetische, poröse Mineralien mit großer, innerer Oberfläche eingesetzt sind. Durch Einsatz von relativ großen Mengen, und zwar 1 bis 65 Gew.-%, insbesondere 5 bis 50 Gew.-%, des Enzympräparates, wird sichergestellt, daß sämtliche dem Abbau zugänglichen Mykotoxine in dem Tierfuttermittel in einem großen Ausmaß abgebaut werden können. Andererseits stellt die Menge an vorhandenen, natürlichen oder synthetischen, porösen Mineralien mit großer, innerer Oberfläche sicher, daß jene Mykotoxine, welche einem chemischen Abbau mit Enzymen nicht zugänglich sind, im wesentlichen an der Oberfläche dieser Mineralien gebunden werden und somit ebenfalls einer Verstoffwechselung nicht mehr zugänglich sind und somit ihre schädigende Wirkung auf die Tiere nicht mehr ausüben können. Es hat sich biebei als günstig erwiesen, die Aktivität des Enzympräparates durch Zumischung der natürlichen oder synthetischen, porösen Materialien für die Epoxidase auf 470 - 600 Ul/g und für die Laktonase auf 280 - 400 Ul/g einzustellen.

Futtermittelzusätze gemäß der vorliegenden Erfindung mit oder ohne Zusatz von natürlichen oder synthetischen, porösen Mineralien mit großer, innerer Oberfläche können hiebei in besonders bevorzugter Weise zur Inaktivierung bzw. zum Abbau von Aflatoxinen, T-2 Toxin, Deoxynivalenol, Nivalenol, Zearalenone, Monoacetoxyscirpenol, H-T-2 Toxin, Verrucarin, Roridin, Satratoxin, Baccharinol, Trichodermol, Diactoxyscirpenol, Fumonisin, Ochratoxin, Moniliformin, Fusarenon X und Crotocin in einem Futtermittel bzw. im Verdauungstrakt von Tieren verwendet werden.

Aufgrund der großen Bandbreite von Mykotoxinen, welche mit den Enzympräparaten gemäß der vorliegenden Erfindung inaktiviert bzw. abgebaut werden können, stellt die Verwendung des Futtermittelzusatzes gemäß der vorliegenden Erfindung eine äußerst günstige und wirkungsvolle Methode zur Entfernung von Giftstoffen aus Futtermitteln zur Verfügung. Es wird durch die Verwendung des Futtermittelzusatzes sichergestellt, daß auch stark mit Mykotoxinen kontaminierte Futtermittel ihre schädigende Wirkung auf Nutztiere nicht mehr entfalten können und daß auf diese Weise insbesondere natürliche Feldfrüchte, welche lediglich einer zerkleinernden, trocknenden oder sonstigen haltbarmachenden Behandlung unterzogen wurden, oder Futtermittelmischungen, nach Vermischung mit dem Futtermittelzusatz gemäß der vorliegenden Erfindung ohne Bedenken und ohne weitere Überprüfung durch wissenschaftliche Institute entweder direkt oder nach Konditionierung mit auf einen leicht sauren pH-Wert eingestelltem Wasser an die Nutztiere verfüttert werden können.

Die vorliegende Erfindung betrifft weiters ein Verfahren zur Herstellung eines Futtermittels, welches im wesentlichen dadurch gekennzeichnet ist, daß gegebenenfalls zerkleinerte und/oder getrocknete Feldfrüchte mit dem erfindungsgemäßen Futtermittelzusatz sowie mit Wasser, welches auf einen zur Umsetzung geeigneten pH-Wert eingestellt ist, vermischt werden, 3 bis 30 min bei 15 °C bis 40 °C gerührt werden und nach einem Einstellen auf einen für ein Futtermittel geeigneten pH-Wert und einem Abziehen der flüssigen Bestandteile unter Einsatz eines Warmluftstromes getrocknet werden. Das Einstellen des pH-Wertes bzw. das Ansäuern kann hiebei mit pharmazeutisch unbedenklichen Säuren, wie insbesondere Salzsäure, Essigsäure oder dgl., durchgeführt werden, wobei bevorzugt ein pH-Wert zwischen 1 und 4,5 eingestellt wird, um eine entsprechend rasche Inaktivierung der in dem Futtermittel enthaltenen Mykotoxine zu erzielen. Erfindungsgemäß wird hiebei ein Temperaturbereich zwischen 15 °C und 40 °C, d.h. im wesentlichen Raumtemperatur bis Körpertemperatur, für einen Zeitraum von 3 bis 30 min eingestellt, um eine weitestgehende Inaktivierung der Mykotoxine zu erzielen. Da ein Futtermittel mit einem pH-Wert im oben genannten, stark sauren Bereich nicht unmittelbar an Tiere verfüttert werden kann, kann nach der Inaktivierung eine Neutralisiation, beispielsweise durch Zusatz von Natronlauge, Natriumhydrogencarbonat, Natriumcarbonat oder dgl., auf einen leicht sauren bis neutralen pH-Wert erfolgen. In weiterer Folge erfolgt nach einem Abziehen der flüssigen Bestandteile eine Trocknung des Futtermittels unter Einsatz eines Warmluftstromes, um ein mykotoxinfreies, lange lagerfähiges Futtermittel zu erhalten. Besonders bevorzugt wird hiebei so vorgegangen, daß der Futtermittelbrei vor dem Trocknen in an sich bekannter Weise zu Pellets verpreßt wird. Derartige Pellets erlauben aufgrund der verringerten Oberfläche eine verringerte Oxidation der Nährstoffe des Futtermittels bei günstiger Lagerfähigkeit und Transportierbarkeit.

Die Erfindung wird nachfolgend anhand eines Beispiels näher erläutert:

### Beispiel 1

### Studie betreffend den klinischen Effekt auf Mykotoxine eines erfindungsgemäßen Futtermittelzusatzes

Futtermittelzusatz: 60 Gew.-% eines Hefepräparates enthaltend
   Epoxidasen und Lactonasen
   10 % Gew.-% Kaolinit
   30 % Gew.-% Klinoptilolith

48 Hybridferkel beiderlei Geschlechts mit einem durchschnittlichen Anfangsgewicht von 8,16 kg, Varianzkoeffizienten von 20,83 %, Durchschnittsalter 28,6 Tage, wurden für den Versuch ausgewählt. Es wurden vergleichbare Ferkel für jede Versuchsstufe ausgewählt. Während des gesamten Versuches wurde die Temperatur und die Feuchtigkeit im Ferkelstall kontrolliert.

Den Versuchsgruppen wurde eine Diät, die drei verschiedene Mykotoxingehalte und zwei verschiedene Arten von Mykotoxinen aufweist, verfüttert. 4 Versuchsgruppen erhielten zusätzlich den erfindungsgemäßen Futtermittelzusatz. Einer Versuchsgruppe wurden weder Mykotoxine noch der erfindungsgemäße Futtermittelzusatz verfüttert.

Das Futter enthielt hauptsächlich Soja, Hirse und Milchpulver und wurde 4 bis 5 Mal täglich verabreicht, Wasser wurde ad libitum angeboten. Die Mykotoxine wurden in Ethanol gelöst, dann mit einem kleinen Teil der Diät für eine anschließende Einmischung in das Futter vorgemischt. Die gebildeten Gruppen werden in Tabelle 1 gezeigt, wobei jeweils die Ferkel der beiden Gurppen mit dem identen Mykotoxingehalt das gleiche Alter und die gleiche Herkunft aufwiesen.

**Tabelle 1**

| Versuchsgruppen mit unterschiedlichem Mykotoxingehalt mit und ohne Ergänzug mit dem Futtermittelzusatz | | |
|---|---|---|
| | T2-Toxin + Aflatoxin B₁ | Futtermittelzusatz |
| 1 | 0,3 ppm + 0,1 ppm | 0 kg/t |
| 2 | 0,5 ppm + 0,1 ppm | 0 kg/t |
| 3 | 1,0 ppm + 0,1 ppm | 0 kg/t |
| 4 | 0,3 ppm + 0,1 ppm | 2 kg/t |
| 5 | 0,5 ppm + 0,1 ppm | 2 kg/t |
| 6 | 1,0 ppm + 0,1 ppm | 2 kg/t |
| 7 | 0,0 ppm + 0,0 ppm | 2 kg/t |
| 8 | 0,0 ppm + 0,0 ppm | 0 kg/t |

Die überprüften Parameter waren das Körpergewicht, die Futteraufnahme, der durchschnittliche tägliche Gewichtszuwachs und die Futterumwandlungsrate.

Die Ergebnisse der Leistungsparameter sind in der Tabelle 2 dargestellt.

**Tabelle 2**

| durchschnittliche Futteraufnahme, täglicher durchschnittlicher Gewichtszuwachs, Futterumwandlungsrate der 8 Versuchsgruppen | | | |
|---|---|---|---|
| Gruppe | Durchschnittl. Futteraufnahme | Täglicher durchschnittl. Gewichtszuwachs | Futterumwandlung |
| 1 | 904 | 453 | 1,99 |
| 2 | 909 | 455 | 1,99 |
| 3 | 796 | 471 | 1,69 |
| 4 | 916 | 530 | 1,73 |
| 5 | 910 | 487 | 1,86 |
| 6 | 818 | 492 | 1,66 |
| 7 | 922 | 520* | 1,77 |
| 8 | 899 | 509 | 1 77 |

| | | | |
|---|---|---|---|
| *) Korrigiert durch die Eliminierung eines Kümmerers | | | |

Klinische Auswertung:
- Gruppe 1 (0,3 ppm T-2 Toxin + 0,1 ppm Aflatoxin B₁ und 0,0 kg Futtermittelzusatz):
   Leichte Konjunktivits, Körperzustand und Haut waren normal, eine leicht reduzierte Futteraufnahme wurde aufgezeichnet.
- Gruppe 2 (0,5 ppm T-2 Toxin + 0,1 ppm Aflatoxin B₁ und 0,0 kg Futtermittelzusatz):
   Eine klare und ernste Irritation der Augen, der Schnauze und der Nase wurden bemerkt, der Körperzustand war normal, ein reduzierter Appetit wurde festgestellt.
- Gruppe 3 (1,0 ppm T-2 Toxin + 0,1 ppm Aflatoxin B₁ und 0,0 kg Futtermittelzusatz):
   Alle Ferkel zeigten eine Irritation der Augen, Nase und Schnauze und der seitlichen Seiten des Halses und Thorax. Alle Ferkel zeigten Bauchblähungen und eine ernsthafte Reduktion der Futteraufnahme beginnend in der 2. Woche. Ein Ferkel erbrach am 12. Tag.
- Gruppen 4 & 5 (0,3 ppm bzw. 0,5 ppm T-2 Toxin + 0,1 ppm Aflatoxin B₁ und 2 kg Futtermittelzusatz):
   Leichte Anzeichen einer Konjunktivitis und Hautirritation wurden bemerkt, die Futteraufnahme und der Körperzustand wurden als normal erachtet.
- Gruppe 6 (1,0 ppm T-2 Toxin + 0,1 ppm Aflatoxin B₁ und 2 kg Futtermittelzusatz):
   2 Ferkel (von 6) zeigten nur leichte Konjunktivitis, alle anderen Beobachtungspunkte waren innerhalb des normalen Bereiches.
- Gruppe 7 (0,0 ppm T-2 Toxin + 0,0 ppm Aflatoxin B₁ und 2 kg Futtermittelzusatz): und
- Gruppe 8 (0,0 ppm T-2 Toxin + 0,0 ppm Aflatoxin B₁ und 0,0 kg Futtermittelzusatz) (Vergleich):
   Die Ferkel waren gesund.

Aus der oben gezeigten Auswertung ist klar ein positiver Einfluß des erfindunsgemäße Futtermittelzusatzes betreffend die Futteraufnahme, den Gewichtszuwachs und die Futterumwandlung in jeder der 3 Dosierungsstufen ersichtlich. Die unbehandelten Gruppen zeigten weitaus stärkere klinische Mykotoxikosensymptome als die Gruppen, die mit dem Futtermittelzusatz behandelt wurden. Sowohl von den Leistungsparametern als auch von der klinischen Seite her ist der günstige Effekt - nämlich ein wirksamer Schutz gegen T-2 Toxine und Aflatoxinkontamination - des erfindungsgemäßen Futtermittelzusatzes offenkundig.

## Patentansprüche

1. Futtermittelzusatz zur Inaktivierung von Mykotoxinen in Futtermitteln bzw. im Verdauungstrakt von Tieren, wobei in einem Futtermittel ein aus Enzyme produzierenden Organismen aus den Gruppen der Pflanzen, Bakterien, Hefen oder Protozoen hergestelltes Enzympräparat in einer Menge von 0,1 bis 3 kg/1000 kg des Futtermittels enthalten ist, dadurch gekennzeichnet, daß die Enzyme produzierenden Organismen aus den Gruppen, die zur Bildung von Epoxidasen und/oder Laktonasen befähigt sind, gewählt sind.

2. Futtermittelzusatz nach Anspruch 1, dadurch gekennzeichnet, daß das Enzympräparat aus einem Rohextrakt aus einer inaktivierten Reinkultur von Enzyme produzierenden Organismen gebildet ist.

3. Futtermittelzusatz nach Anspruch 1 oder 2, dadurch gekennzeichnet, daß als Enzympräparat ein Extrakt aus Saccharomyces-Stämmen, insbesondere aus Saccharomyces telluris, eingesetzt ist.

4. Futtermittelzusatz nach Anspruch 1, 2 oder 3, dadurch gekennzeichnet, daß zusätzlich ein natürliches oder synthetisches, poröses Mineral mit großer, innerer Oberfläche in einer Menge von 0,5 bis 8 kg/1000 kg, insbesondere 0,7 bis 4 kg/1000 kg, des Futtermittels enthalten ist.

5. Futtermittelzusatz nach Anspruch 4, dadurch gekennzeichnet, daß als natürliches oder synthetisches, poröses Mineral mit großer innerer Oberfläche Kieselgure, Zeolithe, 2- und 3-Schichttonminerale oder Mischungen davon mit einem kumulierten Porenvolumen von 0,05 bis 4 cm³/g, insbesondere 0,5 bis 2,5 cm³/g, eingesetzt sind und einen Oberflächen-pH-Wert von 4,5 bis 7,5 aufweisen.

6. Futtermittelzusatz nach einem der Ansprüche 1 bis 5, dadurch gekennzeichnet, daß der Futtermittelzusatz aus einer Mischung aus 1 bis 65 Gew.-%, insbesondere 5 bis 50 Gew.-%, Enzympräparat und 99 bis 35 Gew.-%, insbesondere 95 bis 50 Gew.-%, natürliche oder synthetische, poröse Mineralien mit großer, innerer Oberfläche besteht.

7. Verwendung eines Futtermittelzusatzes nach einem der Ansprüche 1 bis 6 zur Herstellung eines Futtermittels zur Inaktivierung von Aflatoxinen, T-2 Toxin, Deoxynivalenol, Nivalenol, Zearalenonen, Monoacetoxyscirpenol, H-T-2 Toxin, Verrucarin, Roridin, Satratoxin, Baccharinol, Trichodermol, Diacetoxyscirpenol, Fumonisin, Ochratoxin, Moniliformin, Fusarenon X und Crotocin in einem Futtermittel bzw. dem Verdauungstrakt von Tieren.

8. Verfahren zur Herstellung eines Futtermittels, dadurch gekennzeichnet, daß gegebenenfalls zerkleinerte und/oder getrocknete Feldfrüchte mit einem Futtermittelzusatz nach einem der Ansprüche 1 bis 6 sowie mit Wasser, welches durch Zugabe von Säure auf einen zur Umsetzung geeigneten pH-Wert von 1 bis 4,5 eingestellt ist, vermischt werden, 3 bis 30 min bei 15 °C bis 40 °C gerührt werden und nach einem Einstellen auf einen für ein Futtermittel geeigneten pH-Wert und einem Abziehen der flüssigen Bestandteile unter Einsatz eines Warmluftstromes getrocknet werden.

9. Verfahren nach Anspruch 8, dadurch gekennzeichnet, daß der Futtermittelbrei vor dem Trocknen in an sich bekannter Weise zu Pellets verpreßt wird.

## Claims

1. Feed additive for inactivation of mycotoxins in animal feed or in the digestive system of animals, wherein the feed contains an enzyme preparation being produced of organisms selected from the groups of plants, bacterias, yeasts or protozoons in an amount of 0,1 to 3 kg/1000 kg of the feed, wherein the organisms producing enzymes are selected from the groups, which are able to produce epoxidases and/or lactonases.

2. Feed additive according to claim 1, wherein the enzyme preparation is formed by a crude extract of an inactivated pure culture of organisms producing enzymes.

3. Feed additive according to claim 1 or 2, wherein an extract of Saccharomyces-strains, in particular Saccharomyces telluris, is used as enzyme preparation.

4. Feed additive according to claim 1, 2 or 3, wherein additionally a natural or synthetic porous mineral with great inner surface is contained in an amount of 0,5 to 8 kg/1000 kg, in particular 0,7 to 4 kg/1000 kg, of the feed.

5. Feed additive according to claim 4, wherein diatomaceous earthes, zeolites, 2- and 3-layer clay minerals or mixtures thereof with a cumulated pore volume of 0,05 to 4 cm³/g, in particular 0,5 to 2,5 cm³/g, are used as natural or synthetic porous mineral with great inner surface, which have a pH value of 4,5 to 7,5 on the surface.

6. Feed additive according to any of the claims 1 to 5, wherein the feed additive consists of a mixture of 1 to 65 % per weight, in particular 5 to 50 % per weight, of the enzyme preparation and 99 to 35 % per weight, in particular 95 to 50 % per weight, of natural or synthetic, porous minerals with great inner surface.

7. Use of a feed additive according to any of the claims 1 to 6 for preparation of a feed for inactivation of aflatoxins, T-2 toxin, deoxynivalenole, nivalenole, zearalenones, monoacetoxyscirpenole, H-T-2 toxin, verrucarine, roridine, satratoxin, baccharinole, trichodermole, diacetoxyscirpenole, fumonisine, ochratoxin, moniliformine, fusarenone X and crotocine in a feed or in the digestive system of an animal.

8. Process for the preparation of a feed, wherein optionally crushed and/or dried crops are mixed with a feed additive according to any of the claims 1 to 6 and water, which is adjusted to a pH value of 1 to 4,5 suitable for reaction by addition of an acid, are stirred for 3 to 30 minutes at 15 to 40 °C and are dried by the use of a stream of warm air after an adjustment to a pH value suitable for feed and after a draw-off of the liquid ingredients.

9. Process according to claim 8, wherein the feed mash is pressed to pellets before drying in a manner known per se.

## Revendications

1. Additif de fourrage pour inactiver des mycotoxines dans des fourrages et/ou dans l'appareil digestif d'animaux, une préparation d'enzymes, préparée à partir d'organismes produisant des enzymes des groupes des plantes, des bactéries, des levures ou des protozoaires, étant contenue dans un fourrage en une quantité de 0,1 à 3 kg/1000 kg de ce dernier, caractérisé en ce que les organismes produisant des enzymes sont choisis dans les groupes qui sont propres à former des époxydases et/ou des lactonases.

2. Additif de fourrage suivant la revendication 1, caractérisé en ce que la préparation d'enzymes est formée d'un extrait brut d'une culture pure inactivée d'organismes produisant des enzymes.

3. Additif de fourrage suivant l'une des revendications 1 et 2, caractérisé en ce qu'un extrait de souches de Saccharomyces, de Saccharomyces telluris en particulier, est utilisé comme préparation d'enzymes.

4. Additif de fourrage suivant l'une des revendications 1, 2 et 3, caractérisé en ce qu'un minéral poreux, naturel ou synthétique, d'une grande surface interne, est contenu en supplément en une quantité de 0,5 à 8 kg/1000 kg, de 0,7 à 4 kg/1000 kg notamment, du fourrage.

5. Additif de fourrage suivant la revendication 4, caractérisé en ce que des diatomites, des zéolithes, des minéraux argileux à 2 et 3 couches, ou des mélanges de ceux-ci, d'un volume de pores cumulé de 0,05 à 4 cm³/g, de 0,5 à 2,5 cm³/g en particulier, sont utilisés comme minéral poreux, naturel ou synthétique, d'une grande surface interne, et présentent un pH superficiel de 4,5 à 7,5.

6. Additif de fourrage suivant l'une des revendications 1 à 5, caractérisé en ce que l'additif se compose d'un mélange de 1 à 65 % en poids, de 5 à 50 % en poids en particulier, d'une préparation d'enzymes, et de 99 à 35 % en poids, de 95 à 50 % en poids en particulier, de minéraux poreux, naturels ou synthétiques, d'une grande surface interne.

7. Utilisation d'un additif de fourrage suivant l'une des revendications 1 à 6 pour la préparation d'un fourrage en vue d'inactiver des aflatoxines, de la toxine T-2, du déoxynivalénol, du nivalénol, de la zéaralénone, du monoacétoxyscirpénol, de la toxine H-T-2, de la verrucarine, de la roridine, de la satratoxine, du baccharinol, du trichodermol, du diacétoxyscirpénol, de la fumonisine, de l'ochratoxine, de la moniliformine, de la fusarénone X et de la crotocine, dans un fourrage et/ou dans l'appareil digestif d'animaux.

8. Procédé de préparation d'un fourrage, caractérisé en ce que des fruits des champs éventuellement broyés et/ou séchés sont mélangés avec un additif de fourrage suivant l'une des revendications 1 à 6, ainsi qu'avec de l'eau, réglée par addition d'acide à un pH, adéquat pour la conversion, de 1 à 4,5, sont agités pendant 3 à 30 minutes à une température de 15 à 40° C, et sont séchés sous l'effet d'un courant d'air chaud après ajustement à un pH approprié pour un fourrage et extraction des composants liquides.

9. Procédé suivant la revendication 8, caractérisé en ce que la pulpe de fourrage est comprimée en pastilles d'une manière connue en soi, avant le séchage.
